# EUROPEAN PATENT SPECIFICATION

(11) **EP 2 979 963 B1**
(45) Date of publication and mention of the grant of the patent: **04.07.2018**
(21) Application number: 14776368.4
(22) Date of filing: 26.03.2014
(51) Int. Cl.: B62K 19/46, B62K 11/10, B62J 99/00, B60T 17/06, B62J 9/00, B62J 11/00

(54) **POWER SOURCE SUPPLY STRUCTURE OF SADDLE-TYPE VEHICLE**
STROMQUELLENVERSORGUNGSSTRUKTUR FÜR EIN SATTELFAHRZEUG
STRUCTURE D'ALIMENTATION DE SOURCE D'ÉNERGIE DE VÉHICULE DU TYPE À SELLE

(30) Priority: 29.03.2013 JP 2013075181
(43) Date of publication of application: 03.02.2016
(73) Proprietor: Honda Motor Co., Ltd., Minato-ku Tokyo 107-8556 (JP)
(72) Inventor: KAWAIDA, Sora, Wako-shi Saitama 351-0193 (JP); MITSUKAWA, Makoto, Wako-shi Saitama 351-0193 (JP); EBATO, Kaori, Wako-shi Saitama 351-0193 (JP); YAMANAKA, Takasumi, Wako-shi Saitama 351-0193 (JP)
(74) Representative: Fioravanti, Corrado
(86) International application number: PCT/JP2014/058603
(87) International publication number: WO 2014/157372

(56) References cited:
- EP-A1- 2 703 271
- EP-A2- 2 202 137
- JP-A- 2000 313 383
- JP-A- 2003 335 280
- JP-A- 2012 162 124
- TW-A- 201 249 694
- TW-U- M 330 674
- US-A1- 2010 077 807

## Description

### TECHNICAL FIELD

The present invention relates to a power source supply structure of a saddle-type vehicle.

### BACKGROUND ART

Thus far, a technology has been disclosed that provides a storage box at a lower side of the seat of a saddle-type vehicle, and provides an accessory socket inside of the storage box. See, for example, Japanese Unexamined Patent Application, Publication No. 2009-040087.

JP 2003 335280 A, on which the preamble of claim 1 is based, discloses a power source supply structure of a saddle-type vehicle, the vehicle comprising a chassis frame, a front cover that is provided to a front part of the chassis frame, and at least covers a head pipe pivotally supporting a front wheel to be steerable. The power source supply structure comprises an accommodating part and an accessory socket that is provided in the accommodating part and supplies electric power to an external device. The accommodating part includes an openable lid provided at a rear side of the front cover, and opens and closes a rear side of the accommodating part, and a far wall. The far wall, comprising the accessory socket, is part of the ceiling, a rear portion of which is disposed away from the openable lid and the wall portion of the ceiling is disposed opposite to the openable lid. The accessory socket is disposed at the ceiling. The far wall has a curved part at a neighboring position below the accessory socket.

### DISCLOSURE OF THE INVENTION

### Problems to be Solved by the Invention

Vehicles in which are equipped with a front glove box are also included among saddle-type vehicles. In the case of providing an accessory socket to the front glove box, it is necessary to make in a structure arrived at by taking account of the ease of use of the socket.

The present invention has an object of providing a power source supply structure of a saddle-type vehicle that can provide an accessory socket taking consideration of the ease of use in the front glove box.

### Means for Solving the Problems

According to a first aspect of the present invention, a power source supply structure for a saddle-type vehicle is disclosed, the saddle-type vehicle comprising a chassis frame and a front cover that is provided to a front part of the chassis frame, and at least covers a head pipe pivotally supporting a front wheel to be steerable. The power source supply structure comprises an accommodating part and an accessory socket that is provided in the accommodating part and supplies electric power to an external device. The accommodating part includes an openable lid configured to be provided at a rear side of the front cover, and opens and closes a rear side of the accommodating part, and a far wall disposed forwards to oppose the openable lid in a state where the accommodating part is closed, the accessory socket is disposed at the far wall, and the far wall has a first face orthogonal to an axis line of the accessory socket, and a second face curving at a curved part that curves forwards relative to the first face, the second face curving forwards relative to the first face at a neighboring position below the accessory socket. The accommodating part includes a bottom wall below an opening that is closed by the openable lid, and includes a groove that extends vertically to an outer side in the width direction of the opening, at a position adjacent to the opening of a side wall of the accommodating part.

According to a second aspect of the present invention, the groove is formed in a V-shape in a side view.

According to a third aspect of the present invention, the openable lid includes a hook, which is engageable with a hole in the front cover above the opening to fix the openable lid in a closed position; and a brake reservoir tank of the saddle-type vehicle can be provided adjacent to an inner side of the hole.

According to a fourth aspect of the present invention, the accessory socket includes a connector part at an outer side of the far wall of the accommodating part, and an overhang part covering an upper portion of the connector part is provided.

According to a fifth aspect of the present invention, the accommodating part is configured to be provided on either of a left and right side of the front cover, and the accessory socket is provided to be offset to the other side in a vehicle width direction relative to the opening.

According to a sixth aspect of the present invention, an accessory can be provided below the accessory socket at an outer side of the far wall of the accommodating part.

According to a seventh aspect of the present invention, an accessory can be provided at an outside of a side wall of the accommodating part positioned to an interior of the groove. Effects of the Invention

According to the first aspect of the present invention, when a stored object that requires a power source supply like a recharger such as for a smartphone or mobile telephone is detached from or attached to the accessory socket, it is possible to provide a space between a portion on a lower side than the curved part of the far wall and the stored object. By utilizing this space, the attaching and detaching of the stored object to the accessory socket and from the accessory socket become easy. Additionally, it is possible to place a device such as a smartphone or mobile telephone on the bottom wall while inserting in the groove. By ensuring this spot at a position adjoining the opening, it is possible to retain the device such as a smartphone or mobile telephone in a predetermined spot of the accommodating part. It is thereby easy for the rider to place the device such as a smartphone or mobile telephone in a predetermined spot, and easy to remove therefrom.

According to the second aspect of the invention, when a tablet-shaped device such as a smartphone or mobile telephone is inserted from above into the groove, it is possible to retain the device at a position depending on the thickness of this device in the groove. The taking in and out of a tablet-shaped device such as a smartphone or mobile telephone thereby becomes very easy for the rider.

According to the third aspect of the invention, it is possible to open the openable lid when releasing the hook of the openable lid from the hole fixing the openable lid in the close position. In this state, it is possible to confirm the brake fluid level using the hole from which the hook was released.

According to the fourth aspect of the invention, it is possible to suppress the connector part of the accessory socket from direct wetting by rain water, etc. (e.g., rain water, etc. flowing in from the hole fixing the openable lid in the closed position), and the waterproofing of the connector part of the accessory socket can be improved.

According to the fifth aspect of the invention, the rider easily attaches or detaches a recharger such as for a smartphone or mobile telephone to the accessory socket with one hand.

According to a sixth aspect of the invention, it is possible to arrange an accessory by employing the dead space on the outer side of the far wall of the accommodating part.

According to the seventh aspect of the invention, it is possible to arrange the accessory by employing the dead space on the outer side of a side wall positioned at the interior of the groove of the accommodating part. Conversely, it is possible to provide the groove by employing the dead space in which the accessory is not arranged.

### BRIEF DESCRIPTION OF THE DRAWINGS

FIG. 1 is a left-side plan view showing a motorized two-wheel vehicle as a saddle-type vehicle equipped with a power source supply structure according to a first embodiment of the present invention;
FIG. 2 is a rear view showing principle parts of a rear-side front cover of FIG. 1;
FIG. 3 is a view showing a state in which an openable lid of FIG. 2 is opened;
FIG. 4 is a longitudinal-sectional side view along the line IV-IV in FIG. 3;
FIG. 5 is a transverse plan view along the line V-V in FIG. 4;
FIG. 6 is an expanded view sectioning the principle parts in FIG. 5 at a lower position;
FIG. 7 is a front view of the principle parts illustrating by excluding the front-side front cover and front turn signals of the motorized two-wheel vehicle shown in FIG. 1;
FIG. 8 is a perspective view seeing the portion shown in FIG. 7 from the front right of the chassis; and
FIG. 9 is a longitudinal-sectional side view of the principle parts showing the motorized two-wheel vehicle as the saddle-type vehicle equipped with a power source supply structure according to a second embodiment of the present invention.

### PREFERRED MODE FOR CARRYING OUT THE INVENTION

Hereinafter, embodiments of the present invention will be explained while referencing the drawings.

### First Embodiment

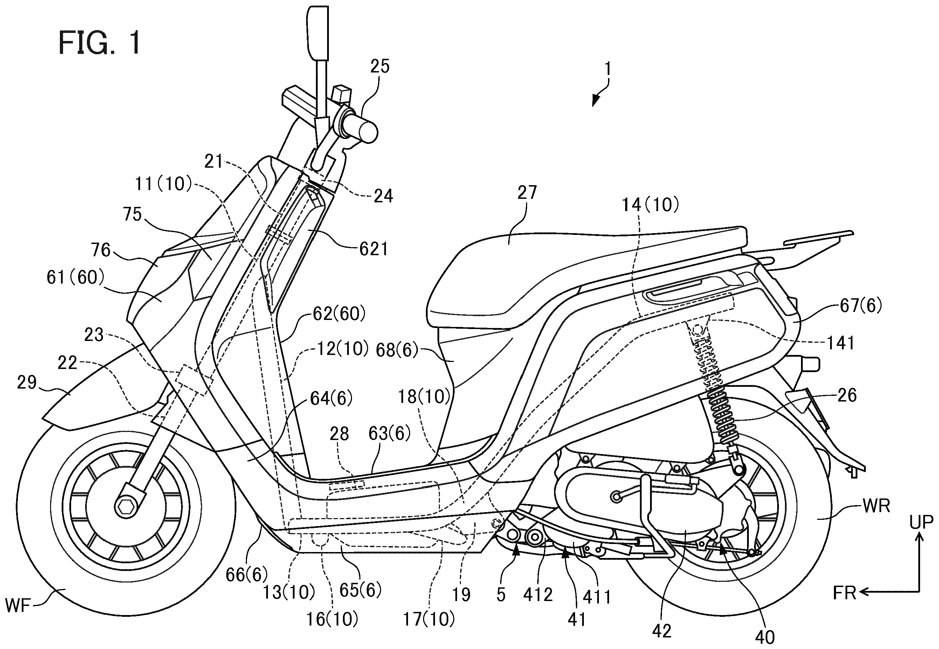

First, the overall configuration of a scooter-type motorized two-wheel vehicle 1 as a saddle-type vehicle equipped with a power source supply structure according to a first embodiment of the present invention will be explained while referencing FIG. 1.

In the following explanation, for the respective directions of front-rear, left-right and up-down, unless otherwise noted, they follow the respective directions of front-rear, right-left and up-down of the motorized two-wheel vehicle 1. Regarding the front-rear direction, closer direction according to the view from the rider (driver) riding the motorized two-wheel vehicle 1 is also referred to as near or near side, and a distant direction according to the view from the rider (driver) is also referred to as far or far side. In addition, in the drawings, the arrow FR indicates ahead of the vehicle, the arrow LH indicates the left side of the vehicle, the arrow RH indicates the right side of the vehicle, and the arrow UP indicates above the vehicle.

As shown in FIG. 1, the motorized two-wheel vehicle 1 of the present embodiment mainly is configured with: a chassis frame 10, a front wheel WF, a front fender 29 arranged above the front wheel WF, a rear wheel WR, a unit swing engine 40 that pivotally supports the rear wheel WR at a rear end side, a link mechanism 5 that is interposed between the unit swing engine 40 and the chassis frame 10, a rear cushion 26 that is interposed between the unit swing engine 40 and the chassis frame 10 at the rear of the vehicle, a seat 27 on which the rider sits, a cover member 6 that covers the respective parts of the vehicle, and a fuel tank 28.

The chassis frame 10 is configured by a plurality of types of steel stock being integrally joined by welding. The chassis frame 10 is configured to include a head pipe 11, a down frame 12, floor frames 13, a seat rail 14, and a plurality of cross members (front cross pipe 16, rear cross pipe 17, etc.).

The head pipe 11 is provided to the front part of the chassis frame 10, and pivotally supports the front wheel WF to be steerable.

The down frame 12 extends rearwards and downwards from the head pipe 11. The down frame 12 is connected to the head pipe 11 at the front end part. The rear end side of the down frame 12 extends obliquely downwards and to the rear.

The floor frames 13 are provided as a pair on the left and right. The pair of floor frames 13 extends rearwards from a lower part of the down frame. The front end part of the pair of floor frames 13 is connected to a lower part of the down frame 12. The pair of floor frames 13 extends rearwards from the pair of down frames 12.

The seat rails 14 are provided as a pair to the left and right. The pair of seat rails 14 is provided below the seat 27. The pair of seat rails 14 extends upwards and rearwards from a rear part of the pair of floor frames 13. The front end parts of the pair of seat rails 14 are connected to the pair of floor frames 13. The rear end parts of the pair of seat rails 14 extend obliquely upwards and rearwards.

A curved part 18 is provided at the boundary between the floor frame 13 and seat rail 14. A pivot plate 19 extending downwards from the curved part 18 is provided to the curved part 18. The pivot plate 19 is provided as a pair to the left and right. The pivot plate 19 is joined to the curved part 18.

The cross members consist of pipe members that extend in the left-right direction, and connect the pair of floor frames 13 and the pair of seat rails 14 in the left-right direction. The cross members include the front cross pipe 16 and rear cross pipe 17.

The front cross pipe 16 and the rear cross pipe 17 connect the pair of floor frames 13 in the left-right direction. The front cross pipe 16 and the rear cross pipe 17 extend in the left-right direction of the vehicle. The front cross pipe 16 and the rear cross pipe 17 are provided to be spaced a predetermined distance to the front/rear of the vehicle. The front cross pipe 16 connects front parts at the front side of the pair of floor frames 13. The rear cross pipe 17 connects rear parts at the rear side of the pair of floor frames 13.

The front wheel WF is pivotally supported by a left and right pair of front forks 22. A steering stem 21 is inserted into the head pipe 11 at a top part of the pair of front forks 22. The steering stem 21 is connected to a top bridge 24 and bottom bridge 23. The steering stem 21 supports the pair of front forks 22 to freely rotate to the left and right relative to the head pipe 11 via the bottom bridge 23. Handles 25 provided on the top bridge 24 enable steering of the front wheel WF.

The unit swing engine 40 is supported by the chassis frame 10 to be able to swing. The unit swing engine 40 is supported to freely swing at the front part side by the chassis frame 11 via the link mechanism 5 described later, and is supported to freely swing at the rear end part by the chassis frame 11 via the rear cushion 26. In addition, the unit swing engine 40 retains the rear wheel WR to freely rotate at the rear side.

The unit swing engine 40 is configured by a basic engine 41 and a power transmission system 42 being integrally provided.

The basic engine 41 is the power unit (motor) that generates the drive power of the motorized two-wheel vehicle 1, and is installed at substantially the center in the front-rear direction of the vehicle. The basic engine 41 has a crank case 411 at the rear side, and is connected to the link mechanism 5 at boss parts 412 at a front part of the crank case 411.

The power transmission system 42 transmits the drive power of the basic engine 41 to the rear wheel WR. The power transmission system 42 is arranged at the rear side of the basic engine 41 and is attached to the basic engine 41, thereby constituting the unit swing engine 40 along with the basic engine 41. The power transmission system 42 is arranged at the left side in the vehicle-width direction.

The link mechanism 5 absorbs the impact loading inputted to the rear wheel WR from the road surface, by permitting swinging in the up-down direction and front-rear direction of the unit swing engine 40. The link mechanism 5 is pivotally supported to be rotatable by the pivot plates 19, and is pivotally supported to be rotatable by the unit swing engine 40.

The rear cushion 26 absorbs the impact loading inputted to the rear wheel WR from the road surface by way of the cushioning action thereof. The upper end part of the rear cushion 26 is connected to the seat rails 14 via an upper end support bracket 141. The lower end part of the rear cushion 26 is connected to the rear end part of the unit swing engine 40.

The rear cushion 26 extends linearly to tie together the upper end support bracket 141 and the rear end part of the unit swing engine 40. The rear cushion 26 extends obliquely downwards and rearwards. The rear cushion 26 is provided in a state maintaining a range to be compressed (stroke). The rear cushion 26 slopes so that an upper end is positioned ahead of the lower end.

The cover member 6 is configured by a front cover 60, a floor cover 63, a floor side cover 64, an under cover 65, an inner fender cover 66, rear side covers 67, an under-seat center cover 68, etc. The front cover 60 is configured by a front-side front cover 61 and a rear-side front cover 62.

The front-side front cover 61 is arranged at a front part of the motorized two-wheel vehicle 1, and covers a front part of the vehicle including the front turn signals 75 and head light 76.

To a front side of the riding position of the rider, the rear-side front cover 62 covers a part of the head pipe 11 and a part of the down frame 12 from a rear part side of the motorized two-wheel vehicle 1. An openable lid 621 that can open and close a glove box described later is attached to a top part of the rear-side front cover 62.

The front cover 60 will be further described later.

Below the riding position of the rider, the floor cover 63 covers an upward side of the pair of floor frames 13 and an upward side of the fuel tank 28, from an upward side of the motorized two-wheel vehicle 1. The front end part and rear end part of the floor cover 63 extend to the upward side.

The upper face of the floor cover 63 forms a flat foot-rest surface, and the floor cover 63 functions as a floor step. The floor cover 63 is arranged above the pair of floor frames 13, and the rider places their feet on the top face side. The floor cover 63 is formed between the head pipe 11 and seat 27 in the front-rear direction of the motorized two-wheel vehicle 1.

Below the riding position of the rider, the floor side cover 64 is arranged at the side of the motorized two-wheel vehicle 1 and covers the fuel tank 28, etc. from a lower side of the motorized two-wheel vehicle 1.

The under cover 65 is arranged at a lower part of the motorized two-wheel vehicle 1 below the riding position of the rider, and covers at least below the pair of floor frames 13 from a downwards side. The under cover 65 is fixed to the front-side cross pipe 16 and the rear-side cross pipe 17.

The inner fender cover 66 is arranged behind the front wheel WF ahead of the under cover 65. The inner fender cover 66 covers below a front part of the motorized two-wheel vehicle 1 from a front part side of the motorized two-wheel vehicle 1. The inner fender cover 66 engages with the under cover 65.

The rear side covers 67 are arranged at side parts of a rear part of the motorized two-wheel vehicle 1, and cover both side faces of the lower part of the seat 27.

The under-seat center cover 68 covers a portion below the front part of the seat 27.

The fuel tank 28 is provided below the floor cover 63. The fuel tank 28 is arranged between the floor cover 63 and under cover 65 in the up-down direction. In addition, the fuel tank 28 is arranged between the pair of floor frames 13 in the vehicle-width direction, and is arranged between the front-side cross pipe 16 and rear-side cross pipe 17 in the front-rear direction.

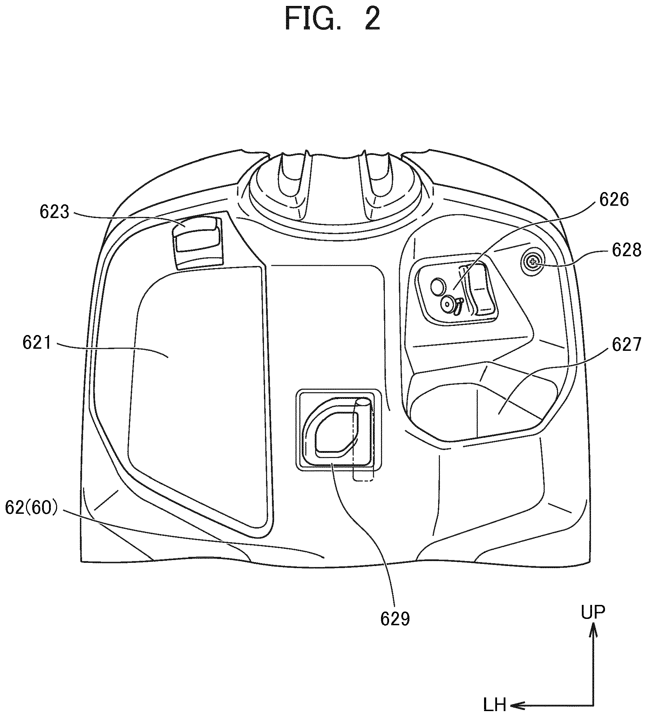

Next, the power source supply structure of the motorized two-wheel vehicle 1 according to the first embodiment will be explained by referencing FIGS. 2 to 8.

As mentioned earlier, the front cover 60 includes the front-side front cover 61 that covers ahead of the head pipe 11, and the rear-side front cover 62 that covers behind the head pipe 11. The front-side front cover 61 is fixed to the head pipe 11 via support plates that are not illustrated. The front-side front cover 61 configures a front face of the vehicle. The rear-side front cover 62 is fixed to the front-side front cover 61. The rear-side front cover 62 covers by covering inside of the vehicle at the rearward side of the heat pipe 11 and ahead of the seat 27.

The head pipe 11, brake unit (CBS system) 70, brake reservoir tank 72, front turn signals 75, headlight 76, glove box 80 as an accommodating part, accessory socket (DC socket) 90, and an electrical component accessory 95, etc. are accommodated in an upper space inside of the front cover 60 surrounded by the front-side front cover 61 and the rear-side front cover 62.

The head pipe 11 is arranged in the center inside of the front cover 60 along the upper space and lower space. The brake unit 70 includes an equalizer 71 serving as an accessory for the CBS system. The brake unit 70 is fixed to the head pipe 11, and is positioned ahead of the head pipe 11 from the center towards the left side. The brake reservoir tank 72 is fixed to the glove box 80 as described later, and is positioned above the glove box 80. The front turn signals 75 are fixed to the front-side front cover 61, and are positioned on both left and right sides of the front-side front cover 61. The headlight 76 is fixed to the front-side front cover 61.

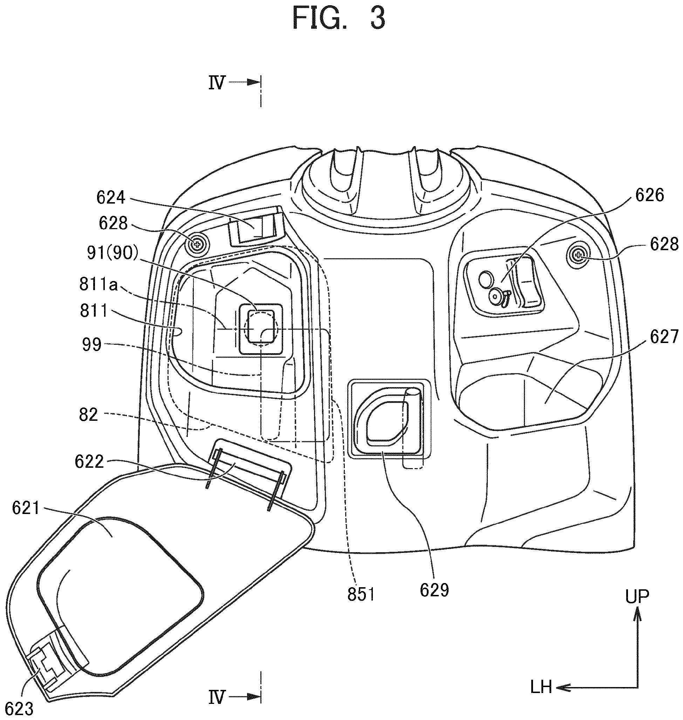

The glove box 80 is fixed to the rear-side front cover 62, and is positioned to the left side of the head pipe 11. As shown in FIGS. 2 and 3, at the right side corresponding to the glove box 80 on the left side, a key cylinder 626 is provided at the top, an inner pocket 627 is provided below the key cylinder 626, and a fastening part 628 of the inner fender cover 66 and the rear-side front cover 62 is provided to the side of the key cylinder 626. The fastening part 628 of the inner fender cover 66 and the rear-side front cover 62 is also provided to the top left of an opening 811 described later of the glove box 80, as shown in FIG. 3. A convenience hook 629 is provided at the center of the rear-side front cover 62.

The glove box 80 is provided near the seat 27, using the space between the left front turn signal 75 and the brake unit 70. The glove box 80 is configured in a box shape having a near wall (rear wall) 81, a bottom wall 82, a far wall (front wall) 83, a left wall 84, a right wall 85 and a top wall 86.

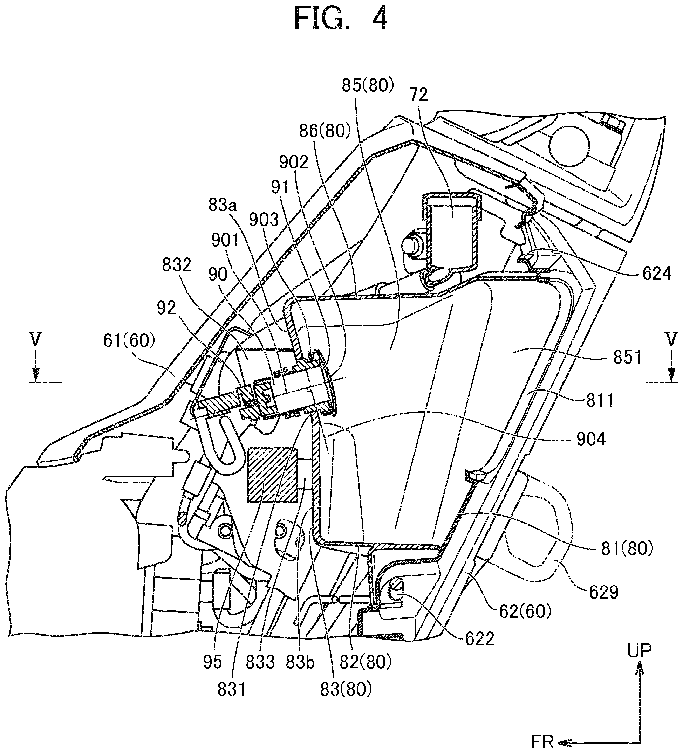

The near wall 81 of the glove box 80 is formed at an inner side of the rear-side front cover 62. As shown in FIG. 4, the left-side top of the rear-side front cover 62 juts out forwards from upwards to downwards. For this reason, the near wall 81 of the glove box 80 also juts out forwards from upwards to downwards. Above the near wall 81 of the glove box 80, an opening 811 that functions as an entrance opening of the glove box 80 is formed. The opening 811 is formed on the left-side top of the rear-side front cover 62.

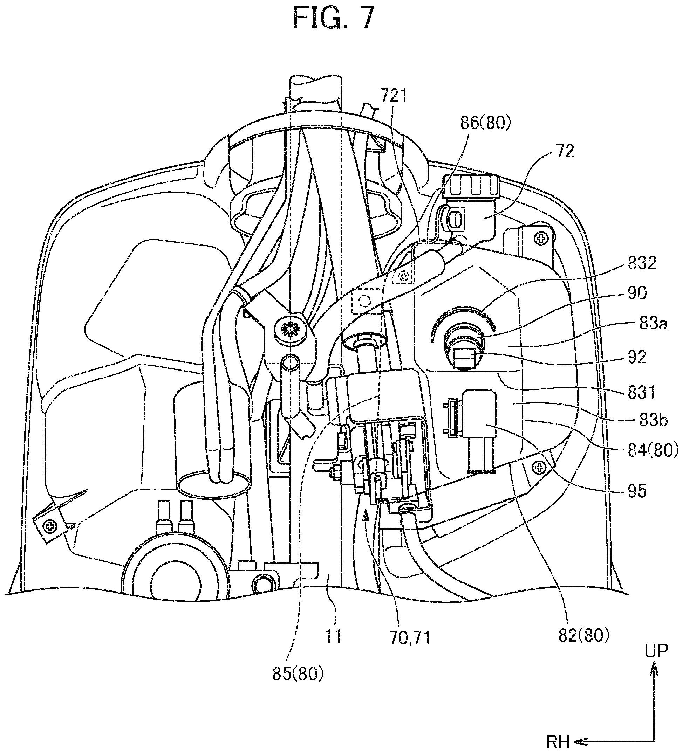

The bottom wall 82 of the glove box 80 extends substantially horizontally in a side view from the near wall 81 to the far wall 83, as shown in FIG. 4. The bottom wall 82 of the glove box 80 extends downhill in a front view from the left wall 84 towards the right wall 85, as shown in FIG. 7.

At a neighboring position below the accessory socket 90, the far wall 83 of the glove box 80 has a curved part 831 that curves forwards relative to an orthogonal face 83a to an axis line 901 of the accessory socket 90. More specifically, the far wall 83 of the glove box 80 is configured by the face 83a the extends obliquely rearwards (near) from the top wall 86 to downwards in a side view, and a face 83b that extends substantially vertically until the bottom wall 82 after curving at the middle, as shown in FIG. 4. At the far wall 83 of the glove box 80, the accessory socket 90 is mounted at a neighboring position above the curved part 831 in the middle. The axis line 901 of the accessory socket 90 is provided so as to be orthogonal to the face (extending obliquely rearwards from the top wall 86 to downwards) 83a that is above the curved part 831 of the far wall 83. At a neighboring position below the accessory socket 90, the far wall 83 of the glove box 80 has the curved part 831 curving forwards (far side) relative to the face 83a to which the accessory socket 90 is provided.

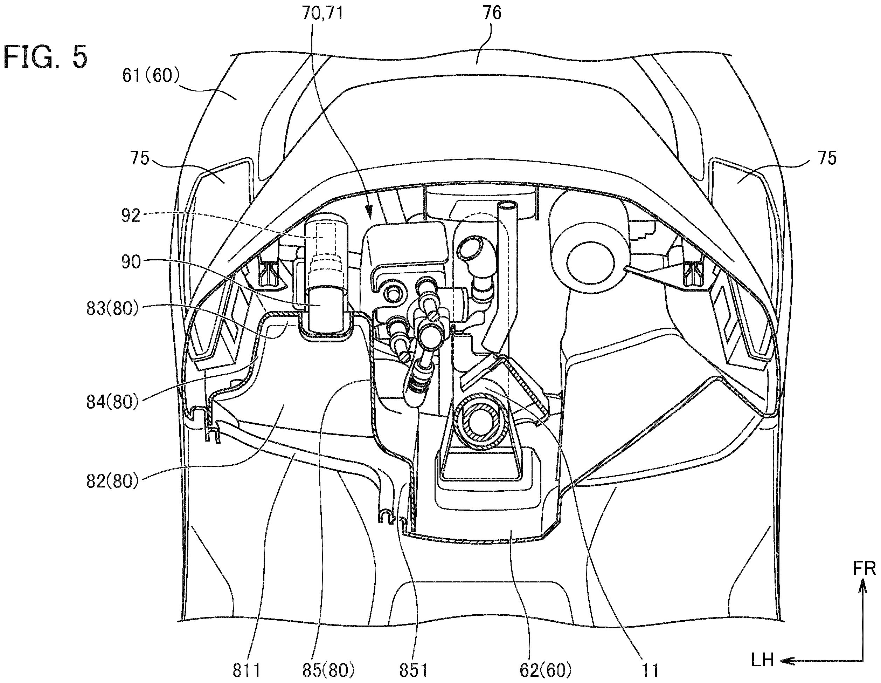

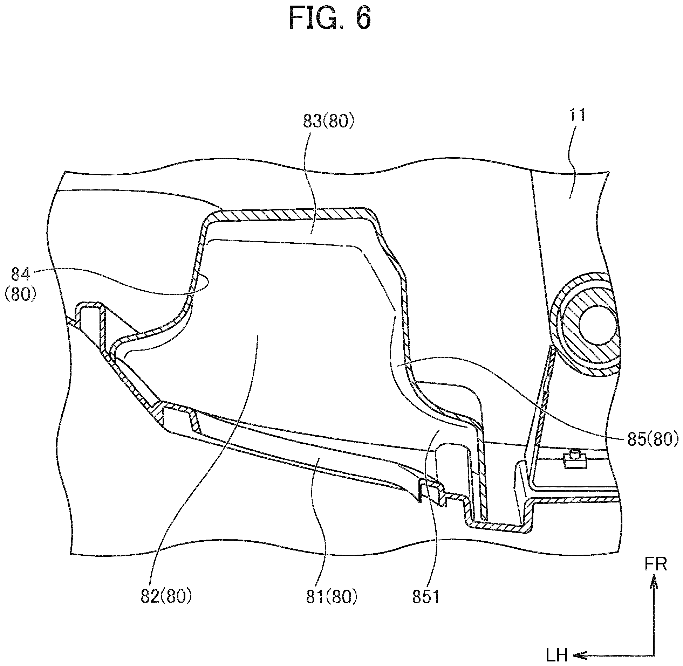

The left wall 84 of the glove box 80 is formed in a shape indented to the right side so as to avoid the left front turn signal 75 in a plan view, as shown in FIG. 5. In the right wall 85 of the glove box 80, a region from the far wall 83 until close to the near wall 81 is formed in a shape indented to the left side so as to avoid the brake unit 70, which includes the equalizer 71 serving as an accessory for the CBS system, in a plan view as shown in FIG. 5. In the right wall 85 of the glove box 80, a groove 851 formed so as to protrude to a side of the head pipe 11 is provided from a side of the head pipe 11 rearwards the brake unit 70. The region of the right wall 85 in which the groove 851 is provided is a dead space in which the equalizer 71 serving as an accessory of the brake unit 70, etc. is not arranged, as shown in FIGS. 5 and 6.

The groove 851 of the right wall 85 of the glove box 80 extends from the bottom wall 82 of the glove box 80 until the top wall 86, as shown in FIG. 4. The groove 851 of the right wall 85 adjoins the opening 811 of the glove box 80, and penetrates to the right of the opening 811, as shown in FIG. 3. In other words, the opening 811 is arranged more to the left than the right-side face of the groove 851 of the right wall 85. The bottom wall 82 of the glove box 80 is positioned below the opening 811 of the glove box 80, as shown in FIG. 3. In other words, the opening 811 is arranged above the bottom wall 82. Therefore, a spot suited to placing devices such as a smartphone or mobile telephone on the bottom wall 82 while inserting in the groove 851 is ensured at the other side of the opening 811 of the glove box 80. Furthermore, the groove 851 is formed in a V-shape in a side view as shown in FIG. 4, having a narrow width downwards, and a wider width as moving upwards. In the V-shaped groove 851, it is possible to especially retain the accessory 99 such as a smartphone or mobile telephone.

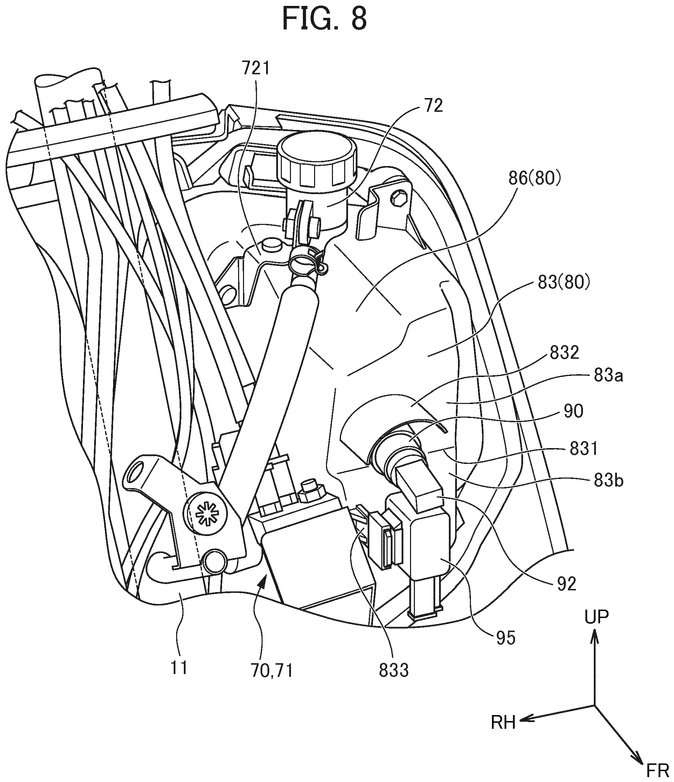

At the top wall 86 of the glove box 80, the brake reservoir tank 72 is fixed by a clamping fixture 721, as shown in FIG. 8. The reservoir tank 72 fixed to the top wall 86 of the glove box 80 is positioned ahead of a hole 624 described later.

An openable lid 621 that opens and closes the opening 811 is provided to a left-side top part of the rear-side front cover 62. More specifically, a hinge shaft 622 is provided below the opening 811 of the rear-side front cover 62. The bottom of the openable lid 621 is supported to freely open and close by this hinge shaft 622. The openable lid 621 includes a hook 623 at the top part thereof. A hole 624 is provided above the opening 811 of the rear-side front cover 62. The openable lid 621 is fixed in the closed position by the hook 623 engaging this hole 624. The brake reservoir tank 72 fixed to the top wall 86 of the glove box 80 is positioned below the hole 624 of the rear-side front cover 62. For this reason, it is possible to confirm the brake fluid level using the hole 624, in a state opening the openable lid 621, by releasing the hook 623 from the hole 624 of the rear-side front cover 62.

The insertion end 91 of the accessory socket 90 is installed in the far wall 83 of the glove box 80 in a side view, as shown in FIG. 4. The insertion end 91 of the accessory socket 90 is protected by a lid 902 that is rotatable around a rotation shaft 903. The accessory socket 90 includes a connector part 92 at an outer side of the far wall 83, extending from the insertion end 91 to the outer side (forwards) of the far wall 83 of the glove box 80. At the outer side of the far wall 83 of the glove box 80, an arc-shaped overhang 832 covering above the connector part 92 of the accessory socket 90 is provided, as shown in FIGS. 4, 7 and 8. The insertion end 91 of the accessory socket 90 is provided to be offset to the right side relative to a center 811a of the opening 811 of the glove box 80 in a rear view, as shown in FIG. 3.

On the outer side of the far wall 83 of the glove box 80, the electrical component accessory 95 is provided below the accessory socket 90, as shown in FIGS. 4, 7 and 8. More specifically, a plate-shaped clasp 833 projecting forwards is provided at the outer side of the far wall 83 of the glove box 80 (refer to FIGS. 4 and 8). A cover having rubber at the hole opening is put on a fuse box or relay 95 serving as the electrical component accessory, and the rubber hole is inserted on the plate-shaped clasp 833. The fuse box or relay 95 is thereby fixed to the clasp of the glove box 80 (refer to FIG. 8).

Next, operation of a power source supply structure of the motorized two-wheel vehicle 1 according to the first embodiment will be explained.

The rider of the motorized two-wheel vehicle 1 can recharge an external device 99 such as a smartphone or mobile telephone using the time traveling by riding the motorized two-wheel vehicle 1. More specifically, upon riding the motorized two-wheel vehicle 1, the rider opens the openable lid 621 positioned on the left side of the rear-side front cover 62, and inserts the recharger for the external device 99 such as a smartphone or mobile telephone into the insertion end 91 of the accessory socket 90 that is at the interior of the glove box 80. Then, the external device 99 such as the smartphone or mobile telephone is placed on the bottom wall 82 while inserting in the groove 851, at the other side of the opening 811 of the glove box 80. When this is done, the external device 99 such as the smartphone or mobile telephone is suitably settled in this spot.

There are the following such effects according to the first embodiment.
(1) The glove box 80 is provided near the seat 27 to the front cover 60, and includes the openable lid 621 that opens and closes the near side of the glove box 80, and the far wall 83 arranged forward to face the openable lid 621. The accessory socket 90 is arranged in the far wall 83 of the glove box 80, and the far wall 83 has the curved part 831 that curves to the far side relative to the orthogonal face 83a to the axis line 901 of the accessory socket 90 below the accessory socket 90.
   It is thereby possible, when a stored object that requires a power source supply like a recharger for the external device 99 such as a smartphone or mobile telephone is detached from or attached to the accessory socket 90, to provide a space between a portion (face 83b) on a lower side than the curved part 831 of the far wall 83 and the stored object (recharger). By utilizing this space, the attaching and detaching of the stored object (recharger) to the accessory socket 90 and from the accessory socket 90 become easy.
(2) The glove box 80 includes the bottom wall 82 below the opening 811 that is closed by the openable lid 621, and includes the groove 851 that extends vertically, towards the right (inner side in the vehicle width direction) at a position adjoining the opening 811 in the right wall 85 of the glove box 80.
   It is thereby possible to place the external device 99 such as a smartphone or mobile telephone on the bottom wall 82 while inserting in the groove 851. By ensuring this spot at a position adjoining the opening 811, it is possible to retain the external device 99 such as a smartphone or mobile telephone in a predetermined spot of the glove box 80. For this reason, it is easy for the rider to place the external device 99 such as a smartphone or mobile telephone in a predetermined spot, and easy to remove therefrom.
   Furthermore, the bottom wall 82 of the glove box 80 extends downhill from the left wall 84 towards the right wall 85. For this reason, the predetermined spot is the lowest position of the bottom wall 82 of the glove box 80. Therefore, in the case of the motorized two-wheel vehicle 1 going straight and a case of leaning to the right for a right turn, and naturally, even in a case of leaning left for a left turn, the external device 99 such as a smartphone or mobile telephone placed in the predetermined spot is retained in the predetermined spot, and will not easily slip out from the spot. Additionally, it is easily removed due to being retained close to the opening 811.
(3) The groove 851 of the right wall 85 of the glove box 80 is formed in a V-shape in a side view, having a narrow width downwards, and a wider width as moving upwards.
   It is thereby possible, when the tablet-shaped external device 99 such as a smartphone or mobile telephone is inserted from above into the groove 851, to retain the external device 99 at a position depending on the thickness of this external device 99 in the groove 851. For this reason, the taking in and out of the tablet-shaped external device 99 such as a smartphone or mobile telephone becomes very easy for the rider.
   Then, in the case of the motorized two-wheel vehicle 1 going straight and a case of leaning to the right for a right turn, and naturally, even in a case of leaning left for a left turn, the tablet-shaped external device 99 such as a smartphone or mobile telephone is sandwiched in the front-rear direction by the groove 851 at a position according to the thickness near the bottom part thereof; therefore, it is retained at a sandwiched predetermined spot thereof, and will not easily slip out from the spot.
(4) The openable lid 621 includes the hook 623, and the hole 624 engaging with the hook 623 to fix the openable lid 621 in a closed position is provided above the opening 811 of the rear-side front cover 62. The brake reservoir tank 72 is provided adjoining the inner side of the hole 624.
   It is thereby possible to open the openable lid 621 when releasing the hook 623 of the openable lid 621 from the hole 624 fixing the openable lid 621 in the close position. In this state, it is possible to confirm the brake fluid level inside the reservoir tank 72 through the hole 624 from which the hook 623 was released.
   When the openable lid 621 is closed, the reservoir tank 72 is not visible from the hole 624, and when opening the openable lid 621, the reservoir tank 72 is visible. Therefore, it is possible to achieve both a merit in the visibility for maintenance when opening the openable lid 621, and a merit in appearance when the openable lid 621 is closed.
   Usually, the engaging part (hole 624) for attaching and detaching the hook 623 of the openable lid 621 and the maintenance window (hole 624) for confirming the brake fluid level in the reservoir tank 72 are provided separately. However, a single hole 624 can be jointly used as the engaging part and maintenance window. For this reason, it is possible to reduce the number of components.
(5) The accessory socket 90 includes the connector part 92 at the outer side of the far wall 83 of the glove box 80, and the overhang 832 is provided above the connector part 92.
   It is thereby possible to suppress the connector part 92 of the accessory socket 90 from direct wetting by rain water, etc. (e.g., rain water, etc. flowing in from the hole 624 fixing the openable lid 621 in the closed position), and the waterproofing of the connector part 92 of the accessory socket 90 can be improved.
   The hole 624 locking the hook 623 of the openable lid 621 is relatively large because of being jointly used as a maintenance window to confirm the brake fluid level in the reservoir tank 72. For example, there is a possibility of rain water flowing in through the hole 624 such as in a case of heavy rain. Even in such a case, the connector part 92 of the accessory hole 90 is drastically suppressed by way of the overhang 832 from being directly wetted by rain water. Therefore, the waterproofing of the connector part 92 of the accessory socket 90 improves compared to a case of the overhang 832 not being provided.
   Additionally, the overhang 832 can also prevent foreign objects, etc. other than rain water from falling onto the connector part 92 of the accessory socket 90.
(6) The glove box 80 is provided on the left side of the front cover 60, and the accessory socket 90 is provided to be offset to the right side in the vehicle width direction relative to the opening 811.
   The rider thereby easily attaches or detaches a recharger for the external device 99 such as a smartphone or mobile telephone to and from the accessory socket 90 with their left hand.
   For example, in the case of the rider straddling the seat 27 of the motorized two-wheel vehicle 1 while parked accessing the glove box 80, so long as the glove box 80 is provided to the left side of the front cover 60, it will be natural to use the left hand. In this case, the accessory socket 90 positioned at the interior side of the glove box 80 is more easily operated with the left hand when arranged at the right side relative to the opening 811, than arranged at the center or left side in the left-right direction. Therefore, the recharger for the external device 99 such as a smartphone or mobile telephone is easily attached to and removed from the accessory socket 90 using the left hand, for the accessory socket 90 offset to the right side relative to the opening 811.
(7) The electrical component accessory 95 such as a fuse box or relay is provided below the accessory socket 90 at the outer side of the far wall 83 of the glove box 80.
   It is thereby possible to arrange the electrical component accessory 95 such as a fuse box or relay by employing the dead space on the outer side of the far wall 83 of the glove box 80.
   The downward region of the accessory socket 90 at the outer side of the far wall 83 of the glove box 80 is dead space. For this reason, arranging the electrical component accessory 95 such as a fuse box or relay by employing this dead space is effective in terms of space efficiency, and maintenance workability is also favorable.
(8) The accessory (equalizer) 71 of the brake unit (CBS system) 70 is provided at the outer side of the right wall 85 positioned at the interior of the groove 851 of the glove box 80.
   It is thereby possible to arrange the accessory 71 such as the equalizer of the CBS system by employing the dead space on the outer side of the right wall 85 positioned at the interior of the groove 851 of the glove box 80. Conversely, it is possible to provide the groove 851 by employing the dead space in which the accessory 71 such as the equalizer of the CBS system is not arranged.

### Second Embodiment

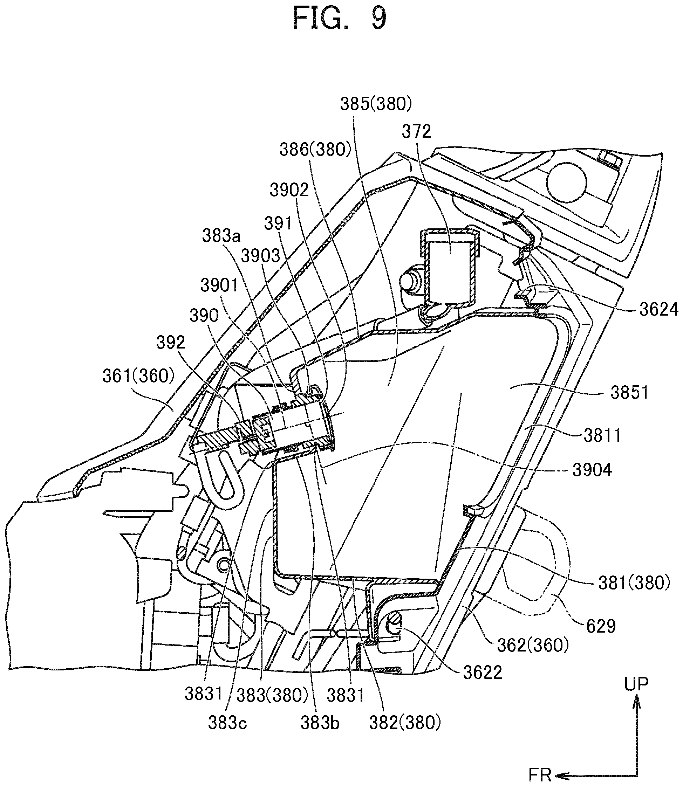

FIG. 9 is a longitudinal-sectional side view of the principle parts showing a motorized two-wheel vehicle as the saddle-type vehicle equipped with a power source supply structure according to a second embodiment of the present invention. More specifically, it is a view corresponding to the longitudinal-sectional side view of FIG. 4 illustrating the power source supply structure according to the first embodiment. For this reason, in FIG. 9, for similar portions as portions illustrated in FIG. 4, redundant explanation are abbreviated by using reference symbols created by adding "3" to the beginning of the reference symbol used in FIG. 4.

Compared to the glove box 80 shown in FIG. 4, a glove box 380 shown in FIG. 9 differs in the shape of a curved part 3831 of a far wall 383. More specifically, in the case of the glove box 80 shown in FIG. 4, in a side view, the far wall 83 is configured by the face 83a that extends obliquely rearwards (near) from the top wall 86 downwards, and a face 83b that extends substantially vertically to the bottom wall 82 after curving at the middle. In other words, the curved part 831 is only formed in one location in the middle in the far wall 83 of the glove box 80. For this reason, when the recharger for the external device 99 such as a smartphone or mobile telephone is attached to or removed from the accessory socket 90, a space that can be made between the recharger and a portion (face 83b) on a lower side than the curved part 831 of the far wall 83 becomes substantially triangular in a side view.

In contrast, in the case of the glove box 380 shown in FIG. 9, in a side view, the far wall 383 is configured by a face 383a that extends from a top wall 386 obliquely downwards to the rear (near), a face 383b that curves in the middle, then extends along a lower side of the accessory socket 390, and a face 383c that curves subsequently once more, then extends substantially vertically until the bottom wall 382. In other words, two curved parts 3831 are formed in the middle in the far wall 383 of the glove box 380. For this reason, when the recharger for the external device 99 such as a smartphone or mobile telephone is attached to or detached from the accessory socket 390, the space that can be made between the recharger and a portion (face 383b and face 383c) on a lower side than the curved parts 3831 of the far 383 assumes a shape resembling a trapezoid in a side view.

There are the following effects according to the second embodiment, in addition to the same effects as the effects of the above (2) to (8).
(9) The space that can be made between the recharger and the portion (face 383b and face 383c) on a lower side than the curved parts 3831 of the far 383 in the case of the glove box 380 shown in FIG. 9 has a greater depth compared to the space that can be made between the recharger and the portion (face 83b) on the lower side than the curved part 831 of the far wall 83 in the case of the glove box 80 shown in FIG. 4. With the ease of inserting a hand thereby being more superior, the attaching and detaching of the recharger to the accessory socket 390 and from the accessory socket 390 becomes much easier.

Although preferred embodiments of the present invention are explained above, the present invention is not to be limited to the aforementioned respective embodiments, and it is possible to implement in various forms.

### Modified Example

In the above-mentioned embodiments, the glove box 80 is provided on the left side of the front cover 60, and the accessory socket 90 is provided to be offset to the right side in the vehicle width direction relative to the opening 811. However, it is also possible to provide the glove box 80 at the right side of the front cover 60, and provide the accessory socket 90 to be offset to the left side in the vehicle width direction relative to the opening 811. In this case, the rider easily attaches or detaches a recharger for the external device 99 such as a smartphone or mobile telephone to and from the accessory socket 90 using their right hand.

In the above-mentioned first embodiment, the axis line 901 of the accessory socket 90 is provided so as to be orthogonal to the face (face extending from the top wall 86 obliquely downwards to the rear) 83a above the curved part 831 of the far wall 83. In other words, the accessory socket 90 is installed to the orthogonal face 83a to the axis line 901 of the accessory socket 90. However, the present invention is not limited thereto. The accessory socket 90 can be mounted to any face that is not orthogonal to the axis line 901 of the accessory socket 90. However, even in the case of mounting to any face, it has a curved part 831 that curves forwards (interior side) relative to a virtual plane 904 (refer to FIG. 4) orthogonal to the axis line 901 of the accessory socket 90 at a neighboring position below the accessory socket 90.

The case of the second embodiment similarly also has the curved parts 3831 that curve forwards (interior side) relative to a virtual plane 3904 (refer to FIG. 4) orthogonal to the axis line 3901 of the accessory socket 390 at a neighboring position below the accessory socket 390.

For example, in the above-mentioned embodiments, examples are explained applying the present invention to a motorized two-wheel vehicle that travels by causing the rear wheel to be rotationally driven by the motive force generated by an engine (internal combustion engine); however, the applications of the present invention are not limited thereto. In other words, the present invention can also be applied to a motorized two-wheel vehicle that travels by causing the rear wheel to be rotationally driven by only the motive force generated by an electric motor. In addition, it is also possible to apply to a saddle-type vehicle of hybrid type that travels by causing the rear wheel to be rotationally driven by a combination of the two motive forces of motive force generated by an engine and motive force generated by an electric motor.

Furthermore, the present invention is not limited to a scooter-type saddle-type vehicle so long as being a vehicle equipped with a seat on which the rider sits, and can also be applied to a saddle-type vehicle of motorcycle-type and cub-type. In addition, it can also be applied to a three-wheeled or four-wheeled saddle-type vehicle so long as being a vehicle equipped with a seat on which the rider sits. In other words, saddle-type vehicle includes all ridden vehicles that the rider rides by straddling the chassis.

### EXPLANATION OF REFERENCE NUMERALS

1 motorized two-wheel vehicle (saddle-type vehicle)
10 chassis frame
11 head pipe
27 seat
60 front cover
61 front-side front cover
62 rear-side front cover
621 openable lid
623 hook
624 hole
70 brake unit (CBS system)
71 equalizer (accessory)
72 (reservoir tank)
80 glove box (accommodating part)
811 opening
82 (bottom wall)
83 far wall (front wall)
83a, 904 orthogonal face
831 curved part
832 overhang
85 right wall
851 groove
90 accessory socket
901 axis line
92 connector part
95 fuse box or relay (accessory)
99 smartphone or mobile telephone (external device) WF front wheel

## Claims

1. A power source supply structure for a saddle-type vehicle (1), the saddle-type vehicle comprising:
a chassis frame (10);
a front cover (60) that is provided to a front part of the chassis frame (10), and at least covers a head pipe (11) pivotally supporting a front wheel (WF) to be steerable;
the power source supply structure comprising:
an accommodating part (80); and
an accessory socket (90) that is provided in the accommodating part (80) and supplies electric power to an external device (99),
wherein the accommodating part (80) includes an openable lid (621) configured to be provided near a seat of the saddle-type vehicle and at a rear side of the front cover (60), wherein said lid (621) opens and closes a rear side of the accommodating part (80), **characterized in that** the accommodating part (80) comprises a far wall (83) disposed forwards to oppose the openable lid (621) in a state where the accommodating part (80) is closed,
wherein the accessory socket (90) is disposed at the far wall (83),
wherein the far wall (83) has a first face (83a, 904) orthogonal to an axis line (901) of the accessory socket (90), and a second face (83b, 383b) curving at a curved part (831) that curves forwards relative to the first face (83a, 904), the second face curving forwards relative to the first face (83a, 383a, 904, 3904), at a neighboring position below the accessory socket (90);
wherein the accommodating part (80) includes a bottom wall (82) below an opening (811) that is closed by the openable lid (621), and includes a groove (851) that extends vertically to an outer side in the width direction of the opening (811), at a position adjacent to the opening (811) of a side wall of the accommodating part (80).

2. The power source supply structure for a saddle-type vehicle (1) according to claim 1, wherein the groove (851) is formed in a V-shape in a side view.

3. The power source supply structure for a saddle-type vehicle (1) according to claim 1 or 2, wherein the openable lid (621) includes a hook (623), which is engageable with a hole (624) in the front cover (60) to fix the openable lid (621) in a closed position, wherein a brake reservoir tank (72) of the saddle-type vehicle can be provided adjacent to an inner side of the hole (624).

4. The power source supply structure for a saddle-type vehicle (1) according to any one of claims 1 to 3, wherein the accessory socket (90) includes a connector part (92) at an outer side of the far wall (83) of the accommodating part (80), and an overhang part (832) covering an upper portion of the connector part (92) is provided.

5. The power source supply structure for
a saddle-type vehicle (1) according to any one of claims 1 to 4, wherein the accommodating part (80) is configured to be provided on either of a left and right side of the front cover (60), and the accessory socket (90) is provided to be offset to the other side in a vehicle width direction relative to the opening (811).

6. The power source supply structure for a saddle-type vehicle (1) according to any one of claims 1 to 5, wherein an accessory (95) can be provided below the accessory socket (90) at an outer side of the far wall (83) of the accommodating part (80).

7. The power source supply structure for a saddle-type vehicle (1) according to claim 1 or 2, wherein an accessory (71) can be provided at an outside of a side wall of the accommodating part (80) positioned to an interior of the groove (851).

## Patentansprüche

1. Eine Leistungsquellenversorgungsstruktur für ein Satteltyp-Fahrzeug (1), wobei das Satteltyp-Fahrzeug folgende Merkmale aufweist:
einen Chassis-Rahmen (10);
eine Frontabdeckung (60), die an einem Vorderteil des Chassis-Rahmens (10) vorgesehen ist und zumindest ein Kopfrohr (11), das ein Vorderrad (WF) in lenkbarer Weise schwenkbar trägt, bedeckt;
wobei die Leistungsquellenversorgungsstruktur folgende Merkmale aufweist:
einen Unterbringungsteil (80); und
eine Zubehörfassung (90), die in dem Unterbringungsteil (80) vorgesehen ist und eine externe Vorrichtung (99) mit elektrischer Leistung versorgt,
wobei der Unterbringungsteil (80) einen öffenbaren Deckel (621) aufweist, der so ausgebildet ist, dass er nahe eines Sitzes des Satteltyp-Fahrzeugs und an einer Rückseite der Frontabdeckung (60) vorgesehen ist, wobei der Deckel (621) eine Rückseite des Unterbringungsteils (80) öffnet und schließt, **dadurch gekennzeichnet, dass** der Unterbringungsteil (80) eine ferne Wand (83) aufweist, die nach vorne angeordnet ist und dabei dem öffenbaren Deckel (621) in einem Zustand, in dem der Unterbringungsteil (80) geschlossen ist, gegenüberliegt,
wobei die Zubehörfassung (90) an der fernen Wand (83) angeordnet ist,
wobei die ferne Wand (83) eine erste Fläche (83a, 904) orthogonal zu einer Achsenlinie (901) der Zubehörfassung (90) und eine zweite Fläche (83b, 383b) aufweist, die an einem gekrümmten Teil (831) gebogen ist, der relativ zu der ersten Fläche (83a, 904) nach vorne gebogen ist, wobei die zweite Fläche an einer benachbarten Position unterhalb der Zubehörfassung (90) relativ zu der ersten Fläche (83a, 383a, 904, 3904) nach vorwärts gebogen ist;
wobei der Unterbringungsteil (80) eine untere Wand (82) unterhalb einer Öffnung (811) aufweist, die durch den öffenbaren Deckel (621) geschlossen ist, und an einer Position benachbart zu der Öffnung (811) einer Seitenwand des Unterbringungsteils (80) eine Rille (851) aufweist, die sich in der Breitenrichtung der Öffnung (811) vertikal zu einer Außenseite erstreckt.

2. Die Leistungsquellenversorgungsstruktur für ein Satteltyp-Fahrzeug (1) gemäß Anspruch 1, bei der die Rille (851) in einer Seitenansicht in einer V-Form gebildet ist.

3. Die Leistungsquellenversorgungsstruktur für ein Satteltyp-Fahrzeug (1) gemäß Anspruch 1 oder 2, bei der der öffenbare Deckel (621) einen Haken (623) aufweist, der mit einem Loch (624) in der Frontabdeckung (60) in Eingriff bringbar ist, um den öffenbaren Deckel (621) in einer geschlossenen Position zu fixieren, wobei ein Bremsreservoirtank (72) des Satteltyp-Fahrzeugs benachbart zu einer Innenseite des Lochs (624) vorgesehen sein kann.

4. Die Leistungsquellenversorgungsstruktur für ein Satteltyp-Fahrzeug (1) gemäß einem der Ansprüche 1 bis 3, bei der die Zubehörfassung (90) einen Verbinderteil (92) an einer Außenseite der fernen Wand (83) des Unterbringungsteils (80) aufweist und ein überhängender Teil (832), der einen oberen Abschnitt des Verbinderteils (92) bedeckt, vorgesehen ist.

5. Die Leistungsquellenversorgungsstruktur für ein Satteltyp-Fahrzeug (1) gemäß einem der Ansprüche 1 bis 4, bei der der Unterbringungsteil (80) so ausgebildet ist, dass er entweder auf einer linken oder einer rechten Seite der Frontabdeckung (60) vorgesehen ist, und die Zubehörfassung (90) so vorgesehen ist, dass sie in einer Fahrzeugbreitenrichtung relativ zu der Öffnung zu der anderen Seite versetzt ist.

6. Die Leistungsquellenversorgungsstruktur für ein Satteltyp-Fahrzeug (1) gemäß einem der Ansprüche 1 bis 5, bei der ein Zubehör (95) unterhalb der Zubehörfassung (90) an einer Außenseite der fernen Wand (83) des Unterbringungsteils (80) vorgesehen sein kann.

7. Die Leistungsquellenversorgungsstruktur für ein Satteltyp-Fahrzeug (1) gemäß Anspruch 1 oder 2, bei der ein Zubehör (71) an einer Außenseite einer Seitenwand des Unterbringungsteils (80), positioniert zu einem Inneren der Rille (851), vorgesehen sein kann.

## Revendications

1. Structure d'alimentation de source d'énergie pour un véhicule du type à selle (1), le véhicule du type à selle comprenant :
un cadre de châssis (10) ;
un capot avant (60) qui est prévu à une partie avant du cadre de châssis (10), et qui couvre au moins un tube de direction (11) supportant de manière pivotante une roue avant (WF) directrice ;
la structure d'alimentation de source d'énergie comprenant :
une partie de réception (80) ; et
une prise d'accessoire (90) qui est prévue dans la partie de réception (80) et alimente en énergie électrique un dispositif externe (99),
dans laquelle la partie de réception (80) comprend un couvercle (621) apte à être ouvert, configuré pour être fourni à proximité d'un siège du véhicule du type à selle et d'un côté arrière du capot avant (60), dans laquelle ledit couvercle (621) ouvre et ferme un côté arrière de la partie de réception (80), **caractérisée en ce que** la partie de réception (80) comprend une paroi distante (83) disposée vers l'avant , en vis-à-vis du couvercle (621) apte à être ouvert dans un état où la partie de réception (80) est fermée,
dans laquelle la prise d'accessoire (90) est disposée au niveau de la paroi distante (83),
dans laquelle la paroi distante (83) a une première face (83a, 904) orthogonale à une ligne axiale (901) de la prise d'accessoire (90), et une deuxième face (83b, 383b) s'incurvant au niveau d'une partie incurvée (831) qui s'incurve vers l'avant par rapport à la première face (83a, 904), la deuxième face s'incurvant vers l'avant par rapport à la première face (83a, 383a, 904, 3904) à une position adjacente sous la prise d'accessoire (90) ;
dans laquelle la partie de réception (80) comprend une paroi inférieure (82) sous une ouverture (811) qui est fermée par le couvercle (621) apte à être ouvert, et comprend une rainure (851) qui s'étend verticalement vers un côté extérieur dans la direction de la largeur de l'ouverture (811), à une position adjacente à l'ouverture (811) d'une paroi latérale de la partie de réception (80).

2. Structure d'alimentation de source d'énergie pour un véhicule du type à selle (1) selon la revendication 1, dans laquelle la rainure (851) est réalisée en forme de V dans une vue latérale.

3. Structure d'alimentation de source d'énergie pour un véhicule du type à selle (1) selon la revendication 1 ou 2, dans laquelle le couvercle (621) apte à être ouvert comprend un crochet (623), apte à venir en prise avec un trou (624) dans le capot avant (60) pour fixer le couvercle (621) apte à être ouvert dans une position fermée, dans laquelle une cuve de réservoir de frein (72) du véhicule du type à selle peut être prévue de manière adjacente à un côté intérieur du trou (624).

4. Structure d'alimentation de source d'énergie pour un véhicule du type à selle (1) selon l'une quelconque des revendications 1 à 3, dans laquelle la prise d'accessoire (90) comprend une partie de connecteur (92) sur un côté extérieur de la paroi distante (83) de la partie de réception (80), et dans laquelle une partie en surplomb (832) couvrant une portion supérieure de la partie de connecteur (92) est prévue.

5. Structure d'alimentation de source d'énergie pour un véhicule du type à selle (1) selon l'une quelconque des revendications 1 à 4, dans laquelle la partie de réception (80) est configurée pour être fournie sur un côté soit gauche soit droit du capot avant (60), et la prise d'accessoire (90) est prévue pour être décalée de l'autre côté par rapport à l'ouverture (811), dans une direction de largeur de véhicule.

6. Structure d'alimentation de source d'énergie pour un véhicule du type à selle (1) selon l'une quelconque des revendications 1 à 5, pouvant être muni d'un accessoire (95) sous la prise d'accessoire (90) au niveau d'un côté extérieur de la paroi distante (83) de la partie de réception (80).

7. Structure d'alimentation de source d'énergie pour un véhicule du type à selle (1) selon la revendication 1 ou 2, pouvant être munie d'un accessoire (71) à l'extérieur d'une paroi latérale de la partie de réception (80) positionnée à l'intérieur de la rainure (851).
